# EUROPEAN PATENT APPLICATION

(11) **EP 4 074 759 A1**
(43) Date of publication of application: **19.10.2022**
(21) Application number: 20899145.5
(22) Date of filing: 04.12.2020
(51) Int. Cl.: C08J 3/20, C08K 5/14, C08L 23/26, C08L 77/00

(54) **RESIN COMPOSITION PRODUCTION METHOD AND MOLDED ARTICLE PRODUCTION METHOD**

(30) Priority: 11.12.2019 JP 2019224019
(71) Applicant: DOW-MITSUI POLYCHEMICALS CO., LTD., Tokyo 1057122 (JP)
(72) Inventor: SHIMIZU, Takahiro, Ichihara-shi, Chiba 299-0108 (JP); OOGI, Kazuyuki, Ichihara-shi, Chiba 299-0108 (JP); YAMAMOTO, Sadaki, Ichihara-shi, Chiba 299-0108 (JP); TATEISHI, Koichi, Ichihara-shi, Chiba 299-0108 (JP)
(74) Representative: Gulde & Partner
(86) International application number: PCT/JP2020/045285
(87) International publication number: WO 2021/117635

(57) **Abstract**

A method of manufacturing a resin composition includes a step of chemically crosslinking an ionomer (A) of an ethylene-unsaturated carboxylic acid copolymer in the presence of an organic peroxide (B), and a step of melt kneading the chemically crosslinked ionomer (A) and a polyamide resin (C).

## Description

### Technical Field

The present disclosure relates to a method of manufacturing a resin composition, and a method of manufacturing a molded body.

In the field of polyamide (for example, Nylon) resins, various types of reformations are conducted in accordance with desired properties of molded products such as impact resistance and moldability. Methods for improving the impact resistance desired for molded products include methods of adjusting the types of polyamide resins and methods of melt kneading a polyamide resin and a different kind polymer. Methods for improving the moldability include methods of adjusting the melt viscosity by adding a modifier such as layer silicate or ionomer.

When molding a thick molded body, so-called thick material, by blow molding, injection molding or the like, it is desired that the melt viscosity is adjusted. Since polyamide resins generally have low melt viscosity, drawdown of the parison during blow molding, which leads to lower moldability, becomes an issue. To deal with this matter, methods for reducing the occurrence of drawdown by increasing the viscosity in the low shear region using modifiers are being explored. Further, in injection molding, inflow of the molten resin into the spaces of the mold may cause development of burrs on the molded products. To reduce the burrs, methods have been being explored that increase the viscosity in the low shear region during the cooling solidification while avoiding excessive thickening in the high shear region during the injection filling.

As a method for reforming a polyamide resin in blow molding, for example, Patent Document 1 discloses a polyamide resin composition in which a polyamide 6 resin and a polyamide 610 resin are mixed at a certain ratio to improve the melt tension, with an ionomer and an ethylene-based elastomer being further blended, in an endeavor to improve moldability and low-temperature toughness in blow molding.
[Patent Document 1] JP-A No. 2007-204674

### SUMMARY OF INVENTION

### Technical Problem

As described above, especially in the molding methods such as blow molding and injection molding, it is desired that polyamide resin compositions have suitable melt viscosity and favorable moldability. However, when adjusting the viscosity using an ionomer resin as a modifier for the purpose of improving moldability, oil resistance of the molded body obtained by using the resin composition tends to decrease. Therefore, there is a room for further improvement in order to achieve both moldability of the resin composition and oil resistance of the molded body obtained by using the resin composition.

The object of the present disclosure is to provide a method of manufacturing a resin composition in which the resin composition having excellent moldability and capable of manufacturing a molded body having excellent oil resistance can be manufactured, and a method of manufacturing a molded body including the method of manufacturing a resin composition.

### Solution to Problem

Specific means for solving the above problems include the following aspects.
<1> A method of manufacturing a resin composition, the method including: a step of chemically crosslinking an ionomer (A) of an ethylene-unsaturated carboxylic acid copolymer in the presence of an organic peroxide (B), and a step of melt kneading the chemically crosslinked ionomer (A) and a polyamide resin (C).
<2> The method of manufacturing a resin composition according to<1>, wherein a content of the polyamide resin (C) is 50% by mass or more with respect to a total of 100% by mass of resin components in the resin composition.
<3> The method of manufacturing a resin composition according to <1> or <2>, wherein a melt mass flow rate of the ionomer (A) of the ethylene-unsaturated carboxylic acid copolymer, measured at 190°C under a load of 2160 g in accordance with JIS K7210-1: 2014, is from 0.1 g/10 minutes to 50 g/10 minutes.
<4> The method of manufacturing a resin composition according to any one of <1> to <3>, wherein a content of a constituent unit derived from an unsaturated carboxylic acid in the ethylene-unsaturated carboxylic acid copolymer is from 5% by mass to 25% by mass with respect to a total amount of the ethylene-unsaturated carboxylic acid copolymer.
<5> The method of manufacturing a resin composition according to any one of <1> to <4>, wherein a crosslinking auxiliary is not substantially used in the step of chemically crosslinking.
<6> The method of manufacturing a resin composition according to any one of <1> to <5>, wherein 100 parts by mass of the ionomer (A) are chemically crosslinked in the presence of from 0.001 parts by mass to 3 parts by mass of the organic peroxide (B) in the step of chemically crosslinking.
<7> A method of manufacturing a molded body, the method including: a step of manufacturing a resin composition according to the method of manufacturing a resin composition according to any one of <1> to <6>; and a step of molding the manufactured resin composition.

### Advantageous Effects of Invention

According to the present disclosure, a method of manufacturing a resin composition in which the resin composition having excellent moldability and capable of manufacturing a molded body having excellent oil resistance can be manufactured, and a method of manufacturing a molded body including the method of manufacturing a resin composition, can be provided.

### DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, the term "process" does not only mean an independent process, but also includes processes that cannot be clearly distinguished from other processes as long as the intended purpose of the process is achieved.

In the present disclosure, a numerical range specified by way of using the expression "(from) ... to ..." includes the numerical values before and after the word "to" as the lower limit value and the upper limit value.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in Examples.

In the present disclosure, each component may contain plural substances corresponding thereto and plural substances corresponding to each component may be used. When plural substances corresponding to each component are present in a resin composition, the content or the amount of each component means the total content or the total amount of the plural substances present in the resin composition unless otherwise specified. When plural substances corresponding to each component are used, the amount used of each component means the total of the plural substances used unless otherwise specified.

In the present disclosure, the expression "(meth)acryl" means at least one of acryl or methacryl.

### [Method of Manufacturing Resin Composition]

A method of manufacturing a resin composition of the present disclosure includes a step of chemically crosslinking an ionomer (A) of an ethylene-unsaturated carboxylic acid copolymer in the presence of an organic peroxide (B), and a step of melt kneading the chemically crosslinked ionomer (A) and a polyamide resin (C). Hereinafter, the ionomer (A) of the ethylene-unsaturated carboxylic acid copolymer may be simply referred to as "ionomer (A)".

According to the method of manufacturing a resin composition of the present disclosure, the resin composition having excellent moldability and capable of manufacturing a molded body having excellent oil resistance can be manufactured. The reason is not clear, but it is presumed as follows.

When the ionomer (A) is added to the polyamide resin (C), the melt viscosity in a low shear region can be increased. This is because a sea portion (that is, the polyamide resin (C) portion) and an island portion (that is, the ionomer (A) portion) interact in the sea-island structure in which the ionomer (A) is dispersed in the polyamide resin (C). The thickening action in the low shear region is more effective as the dispersibility of the ionomer (A) is higher. It is believed that the thickening action in the low shear region is more effective as the dispersibility of the ionomer (A) is higher. For example, the dispersibility of the ionomer (A) can be adjusted by adjusting the acid content or the amount of metal ions of the ionomer (A), and in particular, by increasing the acid content, the dispersibility tends to increase and the thickening effect tends to increase. However, since the ionomer (A) is generally inferior in oil resistance to the polyamide resin (C), the oil resistance when the resin composition is used for a molded product tends to be decrease by adding the ionomer (A) to the polyamide resin (C).

In the method of manufacturing a resin composition of the present disclosure, chemically crosslinking the ionomer (A) by using the organic peroxide (B), and adding the chemically crosslinked ionomer (A) to the polyamide resin (C) to manufacture the resin composition. It is presumed that, by chemically crosslinking the ionomer (A) in advance in this way, the thickening effect of the polyamide resin (C) by the ionomer (A) is improved, and the oil resistance when the resin composition is used for a molded product can be further improved.

The method of manufacturing a resin composition of the present disclosure include the step of chemically crosslinking the ionomer (A) in the presence of the organic peroxide (B). As a result, the ionomer (A) is chemically crosslinked, and by using the chemically crosslinked ionomer (A) in the manufacture of the resin composition, the oil resistance when the resin composition is used for a molded product is excellent.

In the present disclosure, "chemically crosslinking" means kneading a mixture containing at least the ionomer (A) of the ethylene-unsaturated carboxylic acid copolymer and the organic peroxide (B) in a molten or softened state.

In the present disclosure, "chemically crosslinked ionomer (A)" may contain the ionomer (A) chemically crosslinked by the above-mentioned step of chemically crosslinking, and may be a mixture of the chemically crosslinked ionomer (A) and an uncrosslinked ionomer (A).

The above-mentioned step of chemically crosslinking is a step of supplying, for example, the ionomer (A), the organic peroxide (B), and if necessary a crosslinking auxiliary or the like to an extruder, and kneading these components in the extruder.

When the extruder is used in the above-mentioned step of chemically crosslinking, the extruder is not particularly limited, and a single-screw extruder is preferable. The kneading conditions are not particularly limited, and it is preferable that L/D (length/diameter) of the screw is 20 or more and the residence time is 1 minute or more. The heating temperature is preferably in the range of 120°C to 250°C, and more preferably in the range of 150°C to 230°C. The above kneading is preferably carried out in an atmosphere of an inert gas such as nitrogen gas or carbon dioxide gas.

In the above-mentioned step of chemically crosslinking, the mixture containing at least the ionomer (A) and the organic peroxide (B) may or may not contain the resin component other than the ionomer (A) described below, an additive, or the like independently.

In the mixture containing at least the ionomer (A) and the organic peroxide (B), from the viewpoint of chemically crosslinking the ionomer (A) effectively, the total content of the ionomer (A) and the organic peroxide (B) is preferably from 80% by mass to 100% by mass, more preferably from 90% by mass to 100% by mass, and still more preferably 95% by mass to 100% by mass, and particularly preferably 100% by mass, with respect to the total amount of the mixture.

Herein, "the total content of the ionomer (A) and the organic peroxide (B) is 100% by mass" includes an embodiment in which the mixture is composed only of only the ionomer (A) and the organic peroxide (B), and an embodiment in which the mixture is composed only of the ionomer (A), the organic peroxide (B) and an unavoidably mixed impurity.

The method of manufacturing a resin composition of the present disclosure includes the step of melt kneading the above-mentioned chemically crosslinking ionomer (A) and the polyamide resin (C). As a result, the resin composition is manufactured.

The above-mentioned step of melt kneading is a step of, for example, mixing the chemically crosslinked ionomer (A), the polyamide resin (C), and if necessary various additives, and kneading the mixture by a known melt kneading method. Examples of melt kneading methods include a method of melt kneading a mixture, which is obtained by uniformly dry-blending to a specific ratio using a tumbler, a mixer or the like, by using a melt kneader, and a method of melt kneading a part of the mixture and then dry-blending the rest with the kneaded part of the mixture. Examples of the melt kneaders include kneaders such as a single-screw extruder, a twin-screw extruder, a kneader, and a Banbury mixer, and a twin-screw extruder is preferable. The kneading conditions are not particularly limited, and it is preferable that L/D (length/diameter) of the screw is 20 or more and the residence time is 1 minute or more. The heating temperature is preferably in the range of 160°C to 300°C, more preferably in the range of 200°C to 270 °C.

Hereinafter, each component used in the method of manufacturing a resin composition of the present disclosure will be described.

### <Ionomer of Ethylene-Unsaturated Carboxylic Acid Copolymer (A)>

In the method of manufacturing a resin composition of the present disclosure, an ionomer (A) of an ethylene-unsaturated carboxylic acid copolymer is used. By using the ionomer (A) of an ethylene-unsaturated carboxylic acid copolymer for manufacturing the resin composition, the melt viscosity in a low shear region is increased, and the resin composition having excellent moldability can be obtained.

In the present disclosure, an ionomer of an ethylene-unsaturated carboxylic acid copolymer refers to a compound in which at least a part of the acid groups of the ethylene-unsaturated carboxylic acid copolymer are neutralized with metal ions.

The ethylene-unsaturated carboxylic acid copolymer in the ionomer (A) is a copolymer in which at least ethylene and an unsaturated carboxylic acid have been copolymerized. The copolymer may be a bipolymer in which ethylene and an unsaturated carboxylic acid have been copolymerized, may be a terpolymer in which ethylene, an unsaturated carboxylic acid and a third copolymerization component have been copolymerized, and may be a multi-component copolymer in which ethylene, an unsaturated carboxylic acid and two or more other copolymerization components have been further copolymerized.

The ethylene-unsaturated carboxylic acid copolymer in the ionomer (A) may be any of a block copolymer, a random copolymer or a graft copolymer. From the viewpoint of availability, a random bipolymer, a random terpolymer, a graft copolymer of random bipolymers and a graft copolymer of random terpolymers are preferable, and a random bipolymer and a random terpolymer are more preferable.

Since the ionomer (A) is a compound in which acid groups contained in the ethylene-unsaturated carboxylic acid copolymer are neutralized with metal ions, the ethylene-unsaturated carboxylic acid copolymer has at least one acid group in the molecule. Examples of the acid group include a carboxy group, a sulfonic acid group and a phosphoric acid group. The acid group may be a carboxy group derived from the unsaturated carboxylic acid that is a copolymerization component of the ionomer (A), or may be another acid group.

Examples of the unsaturated carboxylic acid that is a copolymerization component of the ethylene-unsaturated carboxylic acid copolymer in the ionomer (A) include an unsaturated carboxylic acid having 4 to 8 carbon atoms and an acid anhydride thereof, such as (meth)acrylic acid, itaconic acid, itaconic anhydride, fumaric acid, crotonic acid, maleic acid and maleic anhydride. In particular, (meth)acrylic acid is preferable as the unsaturated carboxylic acid.

Examples of the copolymerization component other than ethylene or the unsaturated carboxylic acid in the ionomer (A) include an unsaturated carboxylate ester (e.g., alkyl (meth)acrylate ester such as methyl (meth)acrylate, ethyl (meth)acrylate, isobutyl (meth)acrylate, n-butyl (meth)acrylate, isooctyl (meth)acrylate, dimethyl maleate and diethyl maleate); an unsaturated hydrocarbon (e.g., propylene, butene, 1,3-butadiene, pentene, 1,3-pentadiene and 1-hexene); a vinyl ester (e.g., vinyl acetate and vinyl propionate); an oxide, such as vinyl sulfate and vinyl nitrate; a halogen compound (e.g., vinyl chloride and vinyl fluoride); a vinyl group-containing primary amine compound and a vinyl group-containing secondary amine compound; carbon monoxide; and sulfur dioxide.

Among these copolymerization components, an unsaturated carboxylate ester is preferable.

For example, when the ethylene-unsaturated carboxylic acid copolymer in the ionomer (A) is a terpolymer, preferable examples include a terpolymer of ethylene, an unsaturated carboxylic acid and an unsaturated carboxylate ester, and a terpolymer of ethylene, an unsaturated carboxylic acid and an unsaturated hydrocarbon.

Examples of the unsaturated carboxylate ester include an unsaturated alkyl carboxylate ester. The alkyl group of the alkyl ester in the unsaturated alkyl carboxylate ester preferably has 1 to 12 carbon atoms, more preferably 1 to 8 carbon atoms, and still more preferably 1 to 4 carbon atoms. Examples of the alkyl group include methyl, ethyl, n-propyl, isopropyl, n-butyl, isobutyl, sec-butyl, 2-ethylhexyl and isooctyl.

Specific examples of the unsaturated carboxylate ester include an unsaturated alkyl carboxylate ester having an alkyl group that has 1 to 12 carbon atoms (e.g., an alkyl (meth)acrylate ester, such as methyl (meth)acrylate, ethyl (meth)acrylate, isobutyl (meth)acrylate, n-butyl (meth)acrylate and isooctyl (meth)acrylate; and an alkyl maleate ester such as dimethyl maleate or diethyl maleate).

Preferable examples of the unsaturated alkyl carboxylate ester include an alkyl (meth)acrylate ester having 1 to 4 carbon atoms at the alkyl moiety.

Preferable examples of the ethylene-unsaturated carboxylic acid copolymer in the ionomer (A) include an ethylene-(meth)acrylic acid copolymer as a bipolymer, and an ethylene-(meth)acrylic acid-(meth)acrylate ester copolymer (e.g., an ethylene-(meth)acrylic acid-methyl (meth)acrylate copolymer, an ethylene-(meth)acrylic acid-ethyl (meth)acrylate copolymer, an ethylene-(meth)acrylic acid-isobutyl (meth)acrylate copolymer, and an ethylene-(meth)acrylic acid-n-butyl (meth)acrylate copolymer).

The content of the constituent unit derived from the unsaturated carboxylic acid in the ethylene-unsaturated carboxylic acid copolymer is preferably from 5% by mass to 25% by mass, more preferably from 10% by mass to 25% by mass, and still more preferably from 15% by mass to 25% by mass, with respect to the total amount of the copolymer. The content of the constituent unit derived from the unsaturated carboxylic acid of 5% by mass or more is advantageous in terms of the impact resistance of the molded body and the thickening effect. Further, the content of the constituent unit derived from the unsaturated carboxylic acid of 25% by mass or less is advantageous in terms of industrial availability.

The content of the constituent unit derived from ethylene in the ethylene-unsaturated carboxylic acid copolymer is preferably from 75% by mass to 95% by mass, more preferably from 75% by mass to 90% by mass, and still more preferably from 75% by mass to 85% by mass, with respect to the total amount of the copolymer. The content of the constituent unit derived from the ethylene of 75% by mass or more is advantageous in terms of industrial availability. Further, the content of the constituent unit derived from ethylene of 95% by mass or less is advantageous in terms of the impact resistance of the molded body and the thickening effect.

When the ethylene-unsaturated carboxylic acid copolymer is a terpolymer of ethylene, an unsaturated carboxylic acid and an unsaturated carboxylate ester, from the viewpoint of ensuring flexibility, the content of the constituent unit derived from the unsaturated carboxylate ester is preferably from 3% by mass to 25% by mass, and more preferably from 5% by mass to 20% by mass, with respect to the total amount of the terpolymer. The content of the constituent unit derived from the unsaturated carboxylate ester of 3% by mass or more is advantageous in terms of ensuring flexibility, and the content of 25% by mass or less is advantageous in terms of reducing blocking.

When the ethylene-unsaturated carboxylic acid copolymer is a terpolymer of ethylene, an unsaturated carboxylic acid and an unsaturated carboxylate ester, the content of the constituent unit derived from the unsaturated carboxylic acid is preferably from 2% by mass to 15% by mass, and more preferably from 5% by mass to 10% by mass, with respect to the total amount of the terpolymer.

When the ethylene-unsaturated carboxylic acid copolymer is a terpolymer of ethylene, an unsaturated carboxylic acid and an unsaturated carboxylate ester, the content of the constituent unit derived from ethylene is preferably from 60% by mass to 95% by mass, and more preferably from 70% by mass to 90% by mass, with respect to the total amount of the terpolymer.

Examples of the metal ions used for neutralizing the acid group include metal ions such as lithium ions, sodium ions, potassium ions, rubidium ions, cesium ions, zinc ions, magnesium ions and manganese ions. In particular, from the viewpoint of availability, zinc ions, magnesium ions and sodium ions are preferable, zinc ions and sodium ions are more preferable, and zinc ions are still more preferable. The valence of the metal ions is not particularly limited, and a divalent metal ions are preferable from the viewpoint of achieving favorable improvement in impact resistance and a favorable thickening effect. One type of metal ions for neutralizing the acid groups may be used, or two or more types thereof may be used.

In the ionomer (A), the degree of neutralization of the ethylene-unsaturated carboxylic acid copolymer is preferably from 10% by mole to 85% by mole. In terms of the thickening effect, when the degree of neutralization is 10% by mole or more, the dispersibility of the ionomer (A) is improved, whereby a more favorable thickening effect tends to be obtained. Further, in terms of improving the impact resistance, it is preferable that the degree of neutralization is high and that the amount of the metal ions is large. Further, when the degree of neutralization is 85% by mole or less, processability and moldability tend to be excellent. The degree of neutralization is more preferably from 15% by mole to 82% by mole, and still more preferably from 30% by mole to 75% by mole.

The degree of neutralization is the blended ratio (% by mole) of the carboxy groups neutralized by the metal ions to the number of moles of the acid groups, in particular, carboxy groups, of the ethylene-unsaturated carboxylic acid copolymer.

The melt mass flow rate (MFR) of the ionomer (A) of the ethylene-unsaturated carboxylic acid copolymer, measured at 190°C under a load of 2160 g in accordance with JIS K7210-1: 2014, is preferably from 0.1 g/10 minutes to 50 g/10 minutes, more preferably from 0.1 g/10 minutes to 30 g/10 minutes, and still more preferably from 0.1 g/10 minutes to 10 g/10 minutes, from the viewpoints of flowability and moldability. The MFR of the ionomer (A) of the ethylene-unsaturated carboxylic acid copolymer may be adjusted by blending plural ionomers (A) of an ethylene-unsaturated carboxylic acid copolymer having different MFRs.

In the method of manufacturing a resin composition of the present disclosure, an ionomer other than the ionomer (A) of the ethylene-unsaturated carboxylic acid copolymer may be used. Examples of such an ionomer include compounds in which at least a part of the acid groups of the copolymer are neutralized with metal ions and examples of the copolymerization component in the copolymer include an unsaturated carboxylate ester; an unsaturated hydrocarbon; a vinyl ester; an oxide, such as vinyl sulfate and vinyl nitrate; a halogen compound; a vinyl group-containing primary amine compound and a vinyl group-containing secondary amine compound; carbon monoxide; and sulfur dioxide.

The amount used of the ionomer other than the ionomer (A) of the ethylene-unsaturated carboxylic acid copolymer is preferably 10 parts by mass or less, more preferably 5 parts by mass or less, and still more preferably 2 parts by mass or less, with respect to 100 parts by mass of the ionomer (A).

### <Organic Peroxide (B)>

In the method of manufacturing a resin composition of the present disclosure, an organic peroxide (B) is used in the step of chemically crosslinking. The organic peroxide (B) functions as a crosslinking agent for the ionomer (A) in the step of chemically crosslinking.

The organic peroxide (B) is not particularly limited, and examples thereof include dicumyl peroxide, di-tert-butyl peroxide, 2,5-dimethyl-2,5-di-(tert-butylperoxy)hexane, 2,5-dimethyl-2,5-di-(tert-butylperoxy)hexyne-3, 1,3-bis(tert-butylperoxy isopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide, and tert-butyl cumyl peroxide.

Among these, in terms of odor and scorch stability, 2,5-dimethyl-2,5-di-(tert-butylperoxy)hexane, 2,5-dimethyl-2,5-di-(tert-butylperoxy)hexyne-3, 1,3-bis(tert-butylperoxy isopropyl)benzene, 1,1-bis(tert-butyl peroxy)-3,3,5-trimethylcyclohexane, n-butyl-4,4-bis(tert-butylperoxy)valerate and the like are preferable, and 2,5-dimethyl-2,5-di-(tert-butylperoxy)hexane is most preferable.

The amount used of the organic peroxide (B) is preferably from 0.001 parts by mass to 3 parts by mass, more preferably from 0.002 parts by mass to 2.5 parts by mass, and still more preferably from 0.003 parts by mass to 2.0 parts by mass, with respect to 100 parts by mass of the ionomer (A). When the amount used of the organic peroxide (B) is within the above range, the chemically crosslinked ionomer (A) having excellent molding processability can be obtained. When the resin composition obtained from this chemically crosslinked ionomer (A) is used, a molded product having excellent heat resistance and appearance can be manufactured.

From the viewpoint of improving oil resistance when the molded body is molded from the resin composition, the amount used of the organic peroxide (B) may be 0.005 parts by mass or more, or may be 0.2 parts by mass or more, with respect to 100 parts by mass of the ionomer (A).

In the method of manufacturing a resin composition of the present disclosure, a cross linking auxiliary may be used in addition to the organic peroxide (B) which is a crosslinking agent in the step of chemically crosslinking. The crosslinking auxiliary is not particularly limited, and examples thereof include quinone oximes such as p-quinone dioxime and p, p-dibenzoyl quinone oxime; poly (meth) acrylates such as ethylene glycol di(meth) acrylate, trimethylolpropane trimethacrylate, triethylene glycol dimethacrylate; polyallyls such as diallyl fumarate, triallyl cyanurate, triallyl isocyanurate, diallyl phthalate; maleimides such as maleimide and phenylmaleimide; other crosslinking auxiliary, sulfur, maleic anhydride, itaconic acid, divinyl benzene, vinyltoluene, and 1,2-polybutadiene, and it is preferable that the crosslinking auxiliary is not substantially used from the viewpoint of reducing gelation of the resin composition. For example, the amount used of the crosslinking auxiliary is preferably 5 parts by mass or less, and more preferably 0 parts by mass, with respect to 100 parts by mass of the ionomer (A).

In the method of manufacturing a resin composition of the present disclosure, a resin component other than the ionomer (A) may be used in the step of chemically crosslinking. The resin component other than the ionomer (A) is not particularly limited, and examples thereof include ethylene polymers, olefin polymers such as copolymers containing ethylene as a main component (that is, copolymers containing 50% by mass or more of an ethylene component), and ionomers other than the ionomer (A) of the ethylene-unsaturated carboxylic acid copolymer. The resin component other than the ionomer (A) is not substantially used in the step of chemically crosslinking from the viewpoint of a thickening effect of the polyamide (A) caused by the ionomer (A).

The amount used of a resin component other than the ionomer (A) is, for example, preferably 10 parts by mass or less, more preferably 5 parts by mass or less, still more preferably 2 parts by mass or less, and particularly preferably 0 parts by mass, with respect to 100 parts by mass of the ionomer (A).

### <Polyamide Resin (C)>

In the method of manufacturing a resin composition of the present disclosure, a polyamide resin (C) is used in the step of melt kneading.

The type of the polyamide resin (C) is not particularly limited, and examples thereof include a polycondensate of a dicarboxylic acid, such as oxalic acid, adipic acid, sebacic acid, dodecanoic acid, terephthalic acid, isophthalic acid or 1,4-cyclohexyldicarboxylic acid, and a diamine, such as ethylenediamine, tetramethylenediamine, pentamethylenediamine, hexamethylenediamine, decamethylenediamine, 1,4-cyclohexyldiamine or m-xylenediamine; a ring-opening polymer of a cyclic lactam such as ε-caprolactam or ω-laurolactam; a polycondensate of an aminocarboxylic acid such as 6-aminocaproic acid, 9-aminononanoic acid, 11-aminoundecanoic acid or 12-aminododecanoic acid; and a copolymer of the cyclic lactam, dicarboxylic acid and diamine.

As the polyamide resin (C), products that are commercially available may be used. Specific examples include Nylon 4, Nylon 6, Nylon 46, Nylon 66, Nylon 610, Nylon 612, Nylon 6T, Nylon 11, Nylon 12, a copolymer nylon (for example, Nylon 6/66, Nylon 6/12, Nylon 6/610, Nylon 66/12 and Nylon 6/66/610), Nylon MXD6 and Nylon 46.

Among these polyamide resins, Nylon 6 and Nylon 6/12 are preferable from the viewpoint of their availability and improvement in scratch resistance.

In the step of melt kneading, from the viewpoint of easily forming the sea-island structure with the polyamide resin (C) as the sea portion and being excellent in moldability of the resin composition, the amount used of the polyamide resin (C) is preferably 50% by mass or more, preferably 60% by mass or more, more preferably 70% or more, and still more preferably 80% by mass or more, with respect to the total amount of the chemically crosslinked ionomer (A) and the polyamide resin (C). From the viewpoint of obtaining a favorable modification effect, the amount used is preferably 95% by mass or less, more preferably 90% by mass or less, and still more preferably 85% by mass or less.

When melt kneading using a resin component other than the ionomer (A) or the polyamide resin (C) (another resin component) in the step of melt kneading, from the viewpoint of easily forming a sea-island structure with the polyamide resin (C) as the sea portion and being excellent in moldability of the resin composition, the amount used of the polyamide resin (C) is preferably 50% by mass or more, preferably 60% by mass or more, more preferably 70% by mass or more, and still more preferably 80% by mass or more, with respect to the total amount of the chemically crosslinked ionomer (A), the polyamide resin (C) and another resin component. From the viewpoint of obtaining a favorable modification effect, the amount used is preferably 95% by mass or less, more preferably 90% by mass or less, and still more preferably 85% by mass or less.

### <Other Resin Components>

Examples of other resin components include resin components other than the ionomer (A) or the polyamide resin (C). Examples of other resin component include ethylene polymers, olefin polymers such as copolymers containing ethylene as a main component (that is, copolymers containing 50% by mass or more of an ethylene component), and ionomers other than the ionomer (A) of the ethylene-unsaturated carboxylic acid copolymer.

### <Additives>

In the method of manufacturing a resin composition of the present disclosure, in addition to the ionomer (A), the organic peroxide (B) and the polyamide resin (C), various additives may be used, if necessary, as long as the effects of the present disclosure are not impaired. Examples of such additives include plasticizers, fillers, antioxidants, heat-resistant stabilizers, ultraviolet absorbers, light stabilizers, pigments, dyes, antibacterial agents, fungicides, antistatic agents, foaming agents, foaming aids, slip agents (lubricants), antiblocking agents, flame retardants, flame retardant aids, inorganic fillers, fiber reinforcing materials and the like. The timing of adding such an additive is not particularly limited, and for example, such an additive may be mixed with the ionomer (A) and the like before the step of chemically crosslinking, may be mixed with the chemically crosslinked ionomer (A) and the like in the step of melt kneading, or may be added to the resin composition after the step of melt kneading.

### <Resin Composition>

The resin composition obtained by the method of manufacturing a resin composition of the present disclosure will be described.

In the resin composition, from the viewpoint of obtaining a favorable modification effect, the content of the chemically crosslinked ionomer (A) is preferably 5% by mass or more, more preferably 10% by mass or more, and still more preferably 15% by mass or more, with respect to the total amount of the resin component. From the viewpoint of easily forming a sea-island structure with the polyamide resin (C) as the sea portion and being excellent in moldability, the content is preferably 50% by mass or less, more preferably 40% by mass or less, and still more preferably 30% by mass or less.

In the present disclosure, when the resin composition does not include a resin component (another resin component) other than the chemically crosslinked ionomer (A) or the polyamide resin (C), "resin component" means the total of the chemically crosslinked ionomer (A) and the polyamide resin (C) and, when the resin composition includes another resin component, "resin component" means the total of the total of the chemically crosslinked ionomer (A), the polyamide resin (C) and another resin component.

In the resin composition, from the viewpoint of easily forming a sea-island structure with the polyamide resin (C) as the sea portion and being excellent in moldability, the content of the polyamide resin (C) is preferably 50% by mass or more, preferably 60% by mass or more, more preferably 70% by mass or more, and still more preferably 80% by mass or more, the total of the resin component. From the viewpoint of obtaining a favorable modification effect, the content is preferably 95% by mass or less, more preferably 90% by mass or less, and still more preferably 85% by mass or less.

### [Method of Manufacturing Molded Body]

The method of manufacturing a molded body includes a step of manufacturing a resin composition according to the method of manufacturing a resin composition of the present disclosure, and a step of molding the manufactured resin composition. The molding method and the shape of the molded body in the above-mentioned step of molding are not particularly limited, and for example, various molding methods such as extrusion molding, injection molding, compression molding, and blow molding may be used to obtain molded bodies having various shapes. Among them, blow molding is preferable as the molding method from the viewpoint of high melt viscosity in a low shear region.

### Examples

Hereinafter, examples of the present disclosure will be described, but the present disclosure is not limited to the following examples.

The raw materials of the resin composition manufactured in Examples and Comparative Examples are shown below.
(A) Ionomer
   a1) An Zn-type ionomer in which 65% by mole of the carboxy groups of the methacrylic acid that constitutes an ethylene-methacrylic acid-butyl acrylate copolymer (ethylene: methacrylic
   acid: butyl acrylate (mass ratio) = 75:8:17) are neutralized with the metal ions (MFR (190°C, a load of 2160 g) = 2.5 g/10 minutes)
(B) Organic Peroxide
   b1) 2,5-dimethyl-2,5-di-(tert-butylperoxy)hexane (trade name Luperox 101, manufactured by ARKEMA Yoshitomi, Ltd)
(C) Polyamide Resin
   c1) Nylon 6 (trade name 1030B, manufactured by Ube Industries, Ltd., relative viscosity 4.1, melting point 215°C to 225°C)

### <Example 1>

0.1 parts by mass of b1) as the (B) organic peroxide were dry-blended with and impregnated with 100 parts by mass of a1) as the (A) ionomer, and then the obtained mixture was melt-kneaded with a 40 mmcp single-screw extruder under the condition of a cylinder temperature of 210°C, and was granulated to obtain a chemically crosslinked ionomer pellet. After dry-blending 30 parts by mass of the obtained pellet and 70 parts by mass of c1) as the (C) polyamide resin, the obtained mixture was melt-kneaded with a 30 mmcp twin-screw extruder under the condition of a cylinder temperature of 250°C to obtain a resin composition. The obtained resin composition was granulated, dried overnight in a nitrogen atmosphere at 75°C, and then dried at 120°C for 3 hours to obtain a pellet-shaped resin composition.

### [Evaluation of Melt Viscosity]

The melt viscosities [Pa·s] (η_{13.7} and η₁₃₇₄) of the pellet-shaped resin composition obtained in Example 1 at 250°C at the shear rates of 13.7 sec⁻¹ and 1374 sec⁻¹ were measured using a capillary rheometer in accordance with JIS K7199: 1999. The results are shown in Table 1.

### [Evaluation of Oil Resistance]

Using the pellet-shaped resin composition obtained in Example 1, injection molding is performed at 260°C to obtain a square plate having a thickness of 2 mm. Using a test piece obtained by cutting the obtained square plate into a length of 60 mm and a width of 60 mm, the mass change rate after immersion in IRM903 (manufactured by JAPAN SUN OIL COMPANY, LTD.) as a test lubricant at 70°C for 7 days, and the mass change rate after immersion in IRM902 (manufactured by JAPAN SUN OIL COMPANY, LTD.) as a test lubricant at 100°C for 7 days were measured in accordance with JIS K7114: 2001. The results are shown in Table 1.

### < Example 2>

The same operation as in Example 1 was carried except that b1) as the organic peroxide

(B) was changed from 0.1 parts by mass to 0.3 parts by mass to obtain the pellet-shaped resin composition. The obtained pellet-shaped resin composition was used to measure melt viscosity and evaluate oil resistance. The results are shown in Table 1.

### < Example 3>

The same operation as in Example 1 was carried except that b1) as the organic peroxide (B) was changed from 0.1 parts by mass to 0.5 parts by mass to obtain the pellet-shaped resin composition. The obtained pellet-shaped resin composition was used to measure melt viscosity and evaluate oil resistance. The results are shown in Table 1.

### <Comparative Example 1>

c1) as the (C) polyamide resin was melt-kneaded with a 30 mmcp twin-screw extruder under the condition of a cylinder temperature of 250°C using neither the (A) ionomer resin nor the (B) organic peroxide to obtain a resin composition. The obtained resin composition was granulated, dried overnight in a nitrogen atmosphere at 75°C, and then dried at 120°C for 3 hours to obtain a pellet-shaped resin composition.

The obtained pellet-shaped resin composition was used to measure melt viscosity and evaluate oil resistance. The results are shown in Table 1.

### <Comparative Example 2>

After dry-blending 30 parts by mass of a1) as the (A) ionomer and 70 parts by mass of c1) as the (C) polyamide resin without using the (B) organic peroxide, the obtained mixture was melt-kneaded with a 30 mmcp twin-screw extruder under the condition of a cylinder temperature of 250°C to obtain a resin composition. The obtained resin composition was granulated, dried overnight in a nitrogen atmosphere at 75°C, and then dried at 120°C for 3 hours to obtain a pellet-shaped resin composition.

The obtained pellet-shaped resin composition was used to measure melt viscosity and evaluate oil resistance. The results are shown in Table 1.

### <Comparative Example 3>

After dry-blending 30 parts by mass of a composition obtained by impregnating 100 parts by mass of a1) as the (A) ionomer resin with 0.1 parts by mass of b1) as the (B) peroxide, and 70 parts by mass of c1) as the (C) polyamide resin, the obtained mixture was melt-kneaded with a 30 mmcp twin-screw extruder under the condition of a cylinder temperature of 250°C to obtain a resin composition. The obtained resin composition was granulated, dried overnight in a nitrogen atmosphere at 75°C, and then dried at 120°C for 3 hours to obtain a pellet-shaped resin composition.

The obtained pellet-shaped resin composition was used to measure melt viscosity and evaluate oil resistance. The results are shown in Table 1.

### <Comparative Example 4>

The same operation as in Comparative Example 3 was carried except that b1) that is the organic peroxide (B) was changed from 0.1 parts by mass to 0.3 parts by mass to obtain the pellet-shaped resin composition.

The obtained pellet-shaped resin composition was used to measure melt viscosity and evaluate oil resistance. The results are shown in Table 1.

**[Table 1]**

| | | Example 1 | Example 2 | Example 3 | Comparative Example 1 | Comparative Example 2 | Comparative Example 3 | Comparative Example 4 |
|---|---|---|---|---|---|---|---|---|
| Melt viscosity | η_{13.7}[Pa·s] | 4192 | 4106 | 4349 | 2522 | 3360 | 4701 | 4433 |
| | η₁₃₇₄[Pa·s] | 343 | 353 | 396 | 425 | 313 | 377 | 364 |
| | η_{13.7}/η₁₃₇₄ | 12.2 | 11.6 | 11.0 | 5.9 | 10.7 | 12.5 | 12.2 |
| Oil resistance | Mass change rate [%] (IRM903, 70°C, 7days) | 3.1 | 1.6 | 0.9 | 0.4 | 16.2 | 8.7 | 4.6 |
| | Mass change rate [%] (IRM903, 100°C, 7days) | 4.5 | 3.0 | 2.0 | 0.2 | 12.7 | 8.3 | 5.8 |

As shown in Table 1, the compositions having high melt viscosity (η_{13. 7}) in the low shear region and excellent oil resistance were obtained in Examples 1 to 3. In Comparative Example 1 containing only the (C) polyamide resin, the oil resistance was excellent, but the melt viscosity in the low shear region was inferior to that of Examples. Further, in Comparative Example 2 without using the (B) organic peroxide, the melt viscosity in the low shear region and oil resistance were inferior to those of Examples. Further, in Comparative Examples 3 and 4 melt kneading the (A) ionomer, the (B) organic peroxide and the (C) polyamide resin at the same time, the oil resistance was inferior to that of Examples.

It is presumed that the reason why Examples 1 to 3 were superior to Comparative Examples 3 and 4 in oil resistance was that the (C) polyamide resin was not present when the (A) ionomer was chemically crosslinked in the presence of the (B) organic peroxide in Examples 1 to 3, and therefore, the (A) ionomer was efficiently chemically crosslinked and the number of uncrosslinked (A) ionomer was less than that of Comparative Examples 3 and 4.

The disclosure of Japanese Patent Application 2019-224019, filed on December 11, 2019 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

## Claims

1. A method of manufacturing a resin composition, the method comprising:
a step of chemically crosslinking an ionomer (A) of an ethylene-unsaturated carboxylic acid copolymer in the presence of an organic peroxide (B), and
a step of melt kneading the chemically crosslinked ionomer (A) and a polyamide resin (C).

2. The method of manufacturing a resin composition according to claim 1, wherein a content of the polyamide resin (C) is 50% by mass or more with respect to a total of 100% by mass of resin components in the resin composition.

3. The method of manufacturing a resin composition according to claim 1 or 2, wherein a melt mass flow rate of the ionomer (A) of the ethylene-unsaturated carboxylic acid copolymer, measured at 190°C under a load of 2160 g in accordance with JIS K7210-1: 2014, is from 0.1 g/10 minutes to 50 g/10 minutes.

4. The method of manufacturing a resin composition according to any one of claims 1 to 3, wherein a content of a constituent unit derived from an unsaturated carboxylic acid in the ethylene-unsaturated carboxylic acid copolymer is from 5% by mass to 25% by mass with respect to a total amount of the ethylene-unsaturated carboxylic acid copolymer.

5. The method of manufacturing a resin composition according to any one of claims 1 to 4, wherein a crosslinking auxiliary is not substantially used in the step of chemically crosslinking.

6. The method of manufacturing a resin composition according to any one of claims 1 to 5, wherein 100 parts by mass of the ionomer (A) are chemically crosslinked in the presence of from 0.001 parts by mass to 3 parts by mass of the organic peroxide (B) in the step of chemically crosslinking.

7. A method of manufacturing a molded body, the method comprising:
a step of manufacturing a resin composition according to the method of manufacturing a resin composition according to any one of claims 1 to 6; and
a step of molding the manufactured resin composition.
